# EUROPÄISCHE PATENTSCHRIFT

(11) **EP 2 523 155 B1**
(45) Veröffentlichungstag und Bekanntmachung des Hinweises auf die Patenterteilung: **25.07.2018**
(21) Anmeldenummer: 12164634.3
(22) Anmeldetag: 18.04.2012
(51) Int. Cl.: G06Q 20/32, G06Q 20/34, H04W 4/00, H04W 12/00

(54) **Verfahren zum datentechnischen Zuordnen eines NFC-fähigen Endgerätes, einer NFC-Chipkarte und einer Transaktion**
Method for data allocation of an NFC-enabled terminal, an NFC chip card and a transaction
Procédé d'attribution de données techniques d'un terminal NFC, d'une carte à puce NFC et d'une transaction

(30) Priorität: 13.05.2011 DE 102011101529
(43) Veröffentlichungstag der Anmeldung: 14.11.2012
(73) Patentinhaber: Deutscher Sparkassen Verlag GmbH, 70565 Stuttgart (DE); SIZ-Informatik-Zentrum der Sparkassenorganisation GmbH, 53113 Bonn (DE)
(72) Erfinder: Mock-Hecker, Dr., Rüdiger, 73110 Hattenhofen (DE); Luz, Jürgen, 71336 Waiblingen (DE); Marks, Stefan, 70599 Stuttgart (DE); Schröter, Urlich, 73642 Welzheim (DE); Krebs, Thomas, 45481 Mülheim an der Ruhr (DE); Senkbeil, Michael, 53604 Bad Honnef (DE); Bendzullla, Matthias, 50668 Köln (DE); Kaufmann, Matthias, 65719 Hofheim am Taunus (DE)
(74) Vertreter: dompatent von Kreisler Selting Werner - Partnerschaft von Patent- und Rechtsanwälten mbB

(56) Entgegenhaltungen:
- US-A1- 2009 099 961
- US-A1- 2009 254 485
- US-A1- 2010 161 433
- US-A1- 2010 223 186
- US-A1- 2010 306 076
- US-A1- 2011 057 025
- US-A1- 2011 112 968
- US-B1- 7 634 448

## Beschreibung

Die Erfindung betrifft ein Verfahren zum datentechnischen Zuordnen eines NFC-fähigen Endgerätes, einer NFC-Chipkarte und einer Transaktion zwischen einer ersten Person und einer weiteren Instanz. Hierbei werden eine personenbezogene Chipkarte und ein Endgerät, das Daten über ein Nahfeldkommunikationsverfahren kontaktlos mit der Chipkarte austauschen kann, verwendet.

Bei dieser Transaktion kann es sich beispielsweise um das bargeldlose Ausführen eines Bezahlvorgangs handeln. Andere Transaktionen, wie beispielsweise das sichere Anmelden in einem Internetportal, eine Altersverifikation oder Ähnliches, sind ebenfalls möglich.

Zum bargeldlosen Bezahlen eines Produkts, z.B. einer Ware oder einer Dienstleistung in einem Ladengeschäft, ist es bekannt, eine Geldkarte oder eine Bankkarte, die einem Konto zugeordnet ist, in ein Bezahlterminal einzuführen. Der Zahlbetrag wird sodann ggf. nach Eingabe einer Geheimzahl oder Tätigen einer Unterschrift von einem Konto, das der Bankkarte zugeordnet ist, oder von der Geldkarte abgebucht.

Nachteilig an einem derartigen Bezahlverfahren ist, dass die Karte in das Bezahlterminal eingeführt werden muss. Hierbei muss besonders darauf geachtet werden, dass die Karte korrekt in das Terminal eingeführt wird, so dass sie von diesem gelesen werden kann. Gelegentlich kann es vorkommen, dass eine Karte auch bei korrektem Einführen nicht gelesen werden kann, da beispielsweise der Magnetstreifen oder der Chip beschädigt ist.

Beim Tätigen von Einkäufen in einem Online-Shop ist es ferner bekannt, die Bezahlung eines Produkts durch Kreditkarte vorzunehmen. Weiterhin sind Bezahlverfahren wie z.B. Paypal bekannt, bei denen ein Benutzer ein Konto einrichten kann, das wiederum seinem Bankkonto oder seiner Kreditkarte zugeordnet ist. Durch Eingeben eines Benutzernamens und einer Eingabe eines Kennworts in ein solches Konto können Zahlungen an einen Verkäufer oder Händler vorgenommen werden.

Nachteilig an derartigen Zahlverfahren ist, dass ein Nutzer verpflichtet ist, seine Konto- oder Kreditkartendaten einem Internetportal zur Verfügung zu stellen. Hier können Bedenken seitens der Nutzer bestehen. Weiterhin müssen Kreditkartendaten bei einer direkten Bezahlung in einem Online-Shop bei jedem Kauf erneut eingegeben werden, was einen erhöhten Aufwand verursacht.

US 7,634,448 B1 beschreibt ein Verfahren zum eigenständigen Bezahlen eines Produkts durch einen Kunden in einem Ladengeschäft. Hierbei wird ein mobiles Endgerät verwendet, das drahtlos mit einem Terminal in einem Ladengeschäft kommuniziert.

Ein weiteres Bezahlverfahren unter Verwendung eines mobilen Endgeräts ist beschrieben in US 2009/0099961 A1.

Aufgabe der Erfindung ist es, ein vereinfachtes Verfahren zum sicheren Durchführen einer Transaktion zwischen einer ersten Person und einer weiteren Instanz bereitzustellen.

Die Lösung der Aufgabe erfolgt erfindungsgemäß durch die Merkmale des Anspruchs 1.

Das erfindungsgemäße Verfahren erlaubt das sichere Durchführen einer Transaktion zwischen der ersten Instanz, nämlich einer ersten Person und einer weiteren Instanz, beispielsweise einer zweiten Person, einem Unternehmen, einem Ladengeschäft oder Ähnlichem. Das Ladengeschäft kann auch ein mobiler Verkaufsstand, beispielsweise auf einem Markt oder Ähnliches sein. Hierbei werden eine personenbezogene Chipkarte und ein Endgerät, das Daten über ein Nahfeldkommunikationsverfahren kontaktlos mit der Chipkarte austauschen kann, verwendet.

Das erfindungsgemäße Verfahren dient der datentechnischen Zuordnung eines NFC-fähigen Endgerätes und einer datentechnisch mit diesem verbindbaren NFC-Chipkarte zu einer Transaktion, bei der datentechnisch auf die NFC-Chipkarte und eine zweite Chipkarte zugegriffen wird.

Bei dem verwendeten Nahfeldkommunikationsverfahren kann es sich beispielsweise um eine der möglichen Implementierungen eines NFC-Kommunikationsverfahrens handeln.

Durch die NFC-Kommunikation (Near Field Communication) ist ein kontaktloser Austausch von Daten über kurze Strecken zwischen Endgeräten, beispielsweise Mobilfunkendgeräten, möglich. Auch ist es möglich, Daten zwischen Mobilfunkendgeräten und Chipkarten kontaktlos zu übertragen. Anstelle der NFC-Kommunikation können auch andere Nahfeldkommunikationsverfahren eingesetzt werden, die dazu geeignet sind, Daten kontaktlos zwischen dem Endgerät und der Chipkarte zu übertragen.

Zunächst wird die durchzuführende Transaktion durch die erste Person ausgewählt. Dies bedeutet, dass die erste Person ihren Willen zum Ausdruck bringt, eine bestimmte Transaktion durchzuführen. Hierbei kann es sich beispielsweise um den Wunsch handeln, ein bestimmtes Produkt zu erwerben. Dieser Kaufwunsch kann vor Ort in einem Ladengeschäft oder aber auch in einem InternetShop durch Legen eines Produkts in den Warenkorb, ferner telefonisch oder durch sonstige Fernkommunikationsmittel erfolgen. Die ausgewählte Transaktion kann auch darin bestehen, dass sich die Person in einem Internetportal anmelden möchte oder ihr Alter verifizieren möchte.

Das erfindungsgemäße Verfahren umfasst die folgenden Verfahrensschritte. Die Verfahrensschritte müssen nicht notwendigerweise in der genannten Reihenfolge stattfinden:
a) Die Transaktionsdaten, die für die Transaktion relevant sind, werden von der zweiten Instanz über eine kabellose oder kabelgebundene Datenverbindung an ein Transaktionssteuerungssystem übertragen. Das Transaktionssteuerungssystem ist dasjenige System, das die relevanten Verfahrensschritte der Transaktion steuert und insbesondere die Kommunikation und den Datenaustausch zwischen den einzelnen Teilnehmern koordiniert. Das Transaktionssteuerungssystem kann beispielsweise als Schnittstelle zwischen dem Endgerät, einer weiteren Chipkarte und einem Hintergrundsystem fungieren. Bei dem Hintergrundsystem kann es sich beispielsweise um Systeme von Bankinstituten handeln. Sofern es sich bei der durchzuführenden Transaktion um einen Bezahlvorgang handelt, kann beispielsweise der Zahlbetrag von einem Shopsystem des Händlers an das Transaktionssteuerungssystem übermittelt werden.
b) Das Transaktionssteuerungssystem generiert einen der Transaktion zugeordneten Referenzcode. Dieser ist auf dem Transaktionssteuerungssystem einer zweiten Chipkarte zugeordnet. Der Referenzcode kann ferner Transaktionsdaten, beispielsweise einem Zahlbetrag, zugeordnet sein. Die Aufgabe der zweiten Chipkarte ist ein Abgleich der Parameter der Transaktion. Ein Abgleich der Parameter der Transaktion kann beispielsweise bedeuten, dass die Daten auf der zweiten Chipkarte durch die Transaktion verändert werden und somit synchronisiert werden müssen. Beispielsweise kann der zweiten Chipkarte bei einem Bezahlvorgang ein Zahlbetrag gutgeschrieben werden, so dass der Guthabenbetrag auf der zweiten Chipkarte, und insbesondere der ersten Chipkarte, mit der durchgeführten Transaktion synchronisiert werden muss. Weiterhin kann ein Abgleich der Parameter bedeuten, dass Parameter der Transaktion, die durch die Chipkarte übermittelt werden, von der zweiten Chipkarte validiert bzw. überprüft werden. Grundsätzlich findet im Rahmen der Transaktion ein Datenaustausch zwischen der NFC-Chipkarte und einer zweiten Chipkarte statt, indem im Rahmen der Transaktion auf beide Chipkarten zugegriffen wird. Der Zugriff auf die NFC-Chipkarte erfolgt hierbei über das NFC-fähige Endgerät, während der Zugriff auf die zweite Chipkarte durch das Transaktionssteuerungssystem erfolgt.
   Der Referenzcode muss nicht durch das Transaktionssteuerungssystem direkt generiert werden. Alternativ ist es auch möglich, dass er von einer anderen Systemkomponente, z.B. lediglich unter Mitwirkung des Transaktionssteuerungssystems, generiert wird. Dies bedeutet, dass er durch eine andere Komponente generiert wird, die sich mit dem Transaktionssteuerungssystem über die Art der Generierung des Referenzcodes verständigt oder verständigt hat. Dies kann beispielsweise dadurch erfolgen, dass diese Komponente, die den Referenzcode generiert, mit dem Transaktionssteuerungssystem ein gemeinsames Geheimnis oder ein Zertifikat ausgetauscht hat, das für die Generierung des Referenzcodes verwendet wird. Bevorzugt hat das Transaktionssteuerungssystem somit Einfluss auf die Generierung des Referenzcodes. Unabhängig vom Ort der Generierung des Referenzcodes wird dieser durch das Hintergrundsystem eindeutig der zweiten Chipkarte zugeordnet.
   Der Referenzcode wird vom Transaktionssteuerungssystem oder von einer anderen Komponente, die diesen Referenzcode generiert hat, mittelbar an das Endgerät übermittelt. Auch bei einer Generierung des Referenzcodes durch eine Applikation auf dem Endgerät gemäß einer später beschriebenen Ausführungsform kann diese unter Mitwirkung des Transaktionssteuerungssystems erfolgen.
c) Das Endgerät muss sich zum Zeitpunkt des Durchführens der Transaktion bei der ersten Person befinden. Dieses Endgerät wird der zweiten Chipkarte zugeordnet, wobei dieses Zuordnen durch den vom Endgerät zum Transaktionssteuerungssystem übermittelten Referenzcode erfolgt. Über den Referenzcode werden somit das verwendete Endgerät und die zweite Chipkarte und ferner die durchzuführende Transaktion miteinander in Beziehung gebracht, so dass mittels der zweiten Chipkarte bei der auf dem Endgerät durchgeführten Transaktion ein Abgleich der Transaktionsparameter durchgeführt werden kann.
d) Es werden Transaktionsdaten vom Transaktionssteuerungssystem an das Endgerät übertragen. Hierbei werden die Transaktionsdaten ausschließlich derjenigen Transaktion übertragen, die durch den vom Endgerät übertragenen Referenzcode identifiziert wurde.
e) Anschließend wird die Chipkarte an das Endgerät angelegt, wodurch die Transaktion gestartet wird. Anlegen bedeutet, dass die Chipkarte derart in die Nähe des Endgerätes gebracht wird, dass eine Nahfeldkommunikationsverbindung zwischen dem Endgerät und der Chipkarte hergestellt werden kann, so dass die Transaktion durchgeführt werden kann. Die NFC-Kommunikation zwischen dem Endgerät und der Chipkarte kann bspw. im Reader/Writer Mode ablaufen. Hierzu erzeugt das Endgerät ein Hochfrequenzfeld zur Energieversorgung des Transponders in der NFC-Chipkarte. Hierdurch startet das NFC-Endgerät die Kommunikation mit der NFC-Chipkarte. Dieser antwortet durch Lastmodulation.
f) Die Transaktion wird durchgeführt, wobei über das Endgerät, an dem die NFC-Chipkarte angelegt wurde und das über den Referenzcode der zweiten Chipkarte zugeordnet wurde, datentechnisch auf die NFC-Chipkarte zugegriffen wird. Durch das Transaktionssteuerungssystem wird datentechnisch auf die zweite Chipkarte zugegriffen. Somit kann die durchgeführte Transaktion eindeutig dem Endgerät, an dem sie durchgeführt wurde, zugeordnet werden, das wiederum über den Referenzcode eindeutig der zweiten Chipkarte zugeordnet werden kann.

Alternativ zu einer kontaktlosen Kommunikation zwischen der personenbezogenen Chipkarte und dem Endgerät ist es auch möglich, Daten zwischen der Chipkarte und dem Endgerät kontaktbehaftet zu übertragen, indem beispielsweise die Karte in das Endgerät eingeführt wird. Alternativ ist es weiterhin möglich, dass die Karte in gegenständlicher Form gar nicht existiert, sondern als virtuelle Karte ausgebildet ist, die Daten über eine Kommunikationsverbindung mit dem Endgerät austauschen kann. Eine virtuelle Karte kann beispielsweise in Form eines Zertifikats ausgebildet sein, das auf dem Endgerät oder auf einem Datenspeicher hinterlegt ist, der mit dem Endgerät datentechnisch verbindbar ist. Auch die zweite Chipkarte kann als virtuelle Chipkarte ausgebildet sein.

Die Chipkarte, die im erfindungsgemäßen Verfahren verwendet wird, kann personenbezogen sein. Dies bedeutet, dass sie ihrem Besitzer eindeutig zugeordnet werden kann. Das verwendete Endgerät dagegen muss nicht personenbezogen sein. Dies bedeutet, dass ein Besitzer einer Chipkarte beispielsweise die gewünschte Transaktion mit dem Endgerät einer anderen Person durchführen kann und nicht unbedingt sein eigenes Endgerät verwenden muss. Das Endgerät ist somit nicht personenbezogen.

Durch das erfindungsgemäße Verfahren ist es auf einfache Weise möglich, eine Vielzahl verschiedener sicherer Transaktionen durchzuführen. Hierbei muss keine gesonderte Hardware verwendet werden. Es genügt, wenn die erste Person oder die weitere Instanz oder aber ein anderer Teilnehmer der Transaktion über ein NFC-fähiges Endgerät verfügt. Hierbei kann es sich beispielsweise um ein NFC-Mobiltelefon oder um einen NFC-fähigen Laptop, ein NFC-fähiges Smartpad, PDA oder Ähnliches handeln. Das Endgerät verfügt vorzugsweise über eine eigene Internetverbindung. Diese ist bevorzugt unabhängig von der Internetverbindung eines anderen Gerätes. Beispielsweise kann die erste Person einen PC verwenden, der über eine Internetverbindung verfügt, um eine Transaktion anzubahnen. In diesem Fall verfügt das NFC-Endgerät über eine eigene Internetverbindung, die unabhängig von der Internetverbindung des PCs ist. Weitere Vorteile des erfindungsgemäßen Verfahrens werden in Verbindung mit den bevorzugten Ausführungsformen der Erfindung erläutert.

Das erfindungsgemäße Verfahren bietet den Vorteil, dass eine Transaktion, beispielsweise ein Bezahlvorgang, anonym durchgeführt werden kann. Dies bedeutet, dass z.B. für die zweite Instanz die Identität der ersten Person nicht oder nicht ohne größeren Aufwand nachvollziehbar ist. Sofern keine Anonymität ermöglicht werden kann, kann zumindest eine Pseudonymität ermöglicht werden. Dies bedeutet, dass die zweite Instanz nicht in der Lage ist, die Identität der ersten Person nach der Transaktion ohne fremde Hilfe nachzuvollziehen, da die erste Person nicht unter ihrem Namen, sondern unter einem Pseudonym handelt.

In einer alternativen Ausführungsform des Verfahrens, die nicht zur Erfindung gehört, wird der Referenzcode nicht durch das Transaktionssteuerungssystem, sondern durch eine Applikation auf dem Endgerät generiert. Dies kann ebenfalls unter Mitwirkung des Transaktionssteuerungssystems erfolgen. Der Referenzcode wird vom Endgerät an das Transaktionssteuerungssystem übermittelt und zusätzlich der zweiten Instanz zugeführt. Diese ordnet den Referenzcode der durchzuführenden Transaktion zu und übermittelt diese Daten an das Transaktionssteuerungssystem, dem die der zweiten Instanz zugeordnete zweite Chipkarte bekannt ist. Hiernach kann der Referenzcode auf dem Transaktionssteuerungssystem der zweiten Chipkarte zugeordnet werden. Gleichzeitig kann der Referenzcode der durchzuführenden Transaktion zugeordnet werden.

In einer Ausführungsform der Erfindung ist der Referenzcode für mehrere folgende Transaktionen über einen begrenzten oder unbegrenzten Zeitraum gültig. Beispielsweise kann der Referenzcode pro Kalendertag einmalig in Richtung des Endgerätes übermittelt werden und dann für diesen Kalendertag oder einen anderen Zeitraum gültig sein. Der Referenzcode gilt somit für sämtliche Transaktionen, die innerhalb dieses Zeitraums durchgeführt werden.

Alternativ ist es möglich, dass der Referenzcode einmalig für eine Transaktion gültig ist und nach Durchführen dieser Transaktion verfällt.

Der Referenzcode kann in Form von Schriftzeichen vom Transaktionssteuerungssystem ausgegeben werden. Schriftzeichen können insbesondere Buchstaben, Zahlen, Sonderzeichen oder andere Zeichen sein. Weiterhin kann der Referenzcode durch die zweite Instanz an die erste Person weitergegeben werden, nachdem er vom Transaktionssteuerungssystem an die zweite Instanz übermittelt wurde. Es ist möglich, dass der Referenzcode vom Transaktionssteuerungssystem erzeugt wird und dann Daten, die diesen Referenzcode betreffen, vom Transaktionssteuerungssystem an die zweite Instanz übermittelt werden, die dann diese Daten in Schriftzeichen umwandelt und diese Schriftzeichen ausgibt. Alternativ kann das Transaktionssteuerungssystem den Referenzcode direkt in Form von Schriftzeichen generieren und diese Schriftzeichen an die zweite Instanz zur Präsentation an die erste Person übermitteln. Diese Alternativen bestehen auch für die Generierung und Übermittlung des Referenzcodes in Form eines optischen Musters, die im nächsten Absatz beschrieben wird. Die Weitergabe des Referenzcodes durch die zweite Instanz an die erste Person kann persönlich, d.h. unter Anwesenheit der Person bei der zweiten Instanz, erfolgen. Beispielsweise kann die erste Person im Ladengeschäft der zweiten Instanz anwesend sein, so dass der Händler den Referenzcode der ersten Person in diesem Ladengeschäft präsentieren kann. Alternativ kann der Referenzcode mittelbar durch die zweite Instanz an die erste Person weitergegeben werden. Dies kann beispielsweise durch Fernkommunikationsmittel, wie das Telefon oder das Internet, geschehen. Beispielsweise kann der Referenzcode innerhalb eines Shopsystems eines Händlers auf dem Internetbrowser der ersten Person dargestellt werden.

Der Referenzcode kann weiterhin die Form eines optischen Musters, insbesondere eines Barcodes annehmen. Auch dieser wird vom Transaktionssteuerungssystem ausgegeben und kann durch die zweite Instanz mittelbar oder unmittelbar an die erste Person weitergegeben werden. Das Endgerät kann hierbei eine Aufnahmevorrichtung zum Aufnehmen des optischen Musters aufweisen. Bei der Aufnahmevorrichtung kann es sich um eine Kamera oder einen Scanner handeln.

Weiterhin kann der Referenzcode über eine RFID-Antenne mittelbar vom Transaktionssteuerungssystem ausgegeben werden. Dies bedeutet, dass das Transaktionssteuerungssystem den Referenzcode generiert und Informationen über den generierten Referenzcode an eine Komponente übermittelt, die über eine RFID-Antenne verfügt. Diese Antenne muss sich in räumlicher Nähe zum Endgerät befinden. Das Übermitteln der Informationen über den Referenzcode muss nicht zu einem bestimmten Zeitpunkt erfolgen. Diese Informationen können beispielsweise vor Durchführung der gewünschten Transaktion übermittelt werden. Auch eine räumliche Nähe der RFID-Antenne und des Transaktionssteuerungssystems ist nicht notwendig. Dieser Referenzcode kann nunmehr durch die zweite Instanz an die erste Person weitergegeben werden. Das Endgerät kann hierbei einen NFC-Empfänger zum Empfangen des RFID-Signals aufweisen.

Es ist bevorzugt, dass vor der Durchführung der von der ersten Person ausgewählten Transaktion Transaktionsdaten auf einer Anzeige des Endgeräts angezeigt werden. Hierbei kann es sich beispielsweise um den Zahlbetrag handeln, sofern die durchzuführende Transaktion ein Bezahlvorgang ist.

Eine bevorzugte Ausführungsform des erfindungsgemäßen Verfahrens ermöglicht das bargeldlose Ausführen eines Bezahlvorgangs durch Abbuchen eines Geldbetrags von einem Guthaben einer Geldkarte oder von einem Konto. Eine Geldkarte hat hierbei die Funktion einer elektronischen Geldbörse. Das heißt, dass auf diese Geldkarte ein Guthaben geladen werden kann, das durch den Benutzer in einem oder mehreren Bezahlvorgängen durch Abbuchen von der Geldkarte ausgegeben werden kann. Das Verfahren kann weiterhin mit einer üblichen Bankkarte ausgeführt werden, die beispielsweise einem Girokonto eines Bankkunden zugeordnet ist. Der zu zahlende Geldbetrag würde hier vom Konto des Kunden abgebucht werden. Die Geldkarte oder Bankkarte übernimmt bei dieser Ausführungsform des Verfahrens somit die Funktion der Chipkarte. Bei der zweiten Chipkarte kann es sich beispielsweise um eine Händlerkarte handeln, die einem Händler zugeordnet ist.

Das Verfahren umfasst die folgenden Verfahrensschritte, wobei die erste Person ein Käufer und die weitere Instanz ein Händler ist:
a) Zunächst wählt ein Käufer ein zu zahlendes Produkt, z.B. eine Ware oder Dienstleistung aus. Dies kann persönlich in einem Ladengeschäft oder aber auch im Internet, beispielsweise in einem Online-Shop, in einem Katalog, am Telefon usw., erfolgen. Der Käufer teilt sodann einem Verkäufer oder Händler seinen Kaufwunsch mit. Dies kann beispielsweise dadurch erfolgen, dass in einem Online-Shop ein Artikel in den Warenkorb gelegt wird und anschließend ein Bezahlvorgang initiiert wird. Dieser Verfahrensschritt entspricht dem Verfahrensschritt a) aus Anspruch 1. Auch die folgenden Verfahrensschritte korrespondieren in ihrer Nummerierung mit den Verfahrensschritten des Anspruchs 1.
b) Der Händler überträgt den Zahlbetrag für das ausgewählte Produkt an das Transaktionssteuerungssystem.
c) Das Transaktionssteuerungssystem oder eine andere Komponente unter Mitwirkung des Transaktionssteuerungssystems generiert den Referenzcode des Transaktionssteuerungssystems. Bei der zweiten Chipkarte kann es sich um eine Händlerkarte handeln, auf der der Betrag, der vom Käufer bezahlt wird, gutgeschrieben werden kann. Die Chipkarte kann als Geldkarte oder Bankkarte ausgebildet sein, die einem Bankkonto des Käufers zugeordnet ist. Das Übermitteln des Referenzcodes vom Transaktionssteuerungssystem in das Endgerät kann beispielsweise über eine mobile Datenverbindung, wie z.B. eine UMTS-Verbindung, geschehen. Hierbei handelt es sich um eine unmittelbare Übermittlung des Referenzcodes. Alternativ kann der Referenzcode auch auf andere Weise an das Endgerät übermittelt werden. Beispielsweise kann er in einem Browser angezeigt werden, mit Hilfe dessen der Käufer einen Internetkauf tätigen möchte, oder er kann dem Käufer telefonisch mitgeteilt werden. Hierbei handelt es sich um eine mittelbare Übermittlung des Referenzcodes. Der Käufer kann also den Referenzcode beispielsweise manuell in das Endgerät übertragen, so dass dieses dem Empfängerkonto zugeordnet werden kann.
   Weiterhin ist es möglich, den Referenzcode, beispielsweise als Barcode, darzustellen, der vom Käufer z.B. unmittelbar durch sein Endgerät fotografiert und weiterverwendet werden kann. Auf diese Weise ist es nicht mehr notwendig, den Referenzcode manuell in das Endgerät einzugeben. Die Eingabe des Referenzcodes in das Endgerät kann auch durch einen Händler oder Verkäufer anstelle des Käufers stattfinden.
   Das Zuordnen des Endgeräts zum Empfängerkonto kann vor, während oder nach dem Durchführen des Verfahrensschritts a) durchgeführt werden.
   Im Übrigen entspricht der Verfahrensschritt c) dem Verfahrensschritt c) aus Anspruch 1.
d) Das Endgerät wird nun der Händlerkarte zugeordnet, indem der Referenzcode vom Endgerät zum Transaktionssteuerungssystem übermittelt wird. Die Händlerkarte identifiziert das Empfängerkonto, auf dem der gezahlte Betrag gutgeschrieben wird.
   Bei dem verwendeten Endgerät kann es sich beispielsweise um ein Mobilfunkendgerät, z.B. ein Smartphone des Käufers, handeln. Alternativ kann es sich hierbei um das Mobilfunkendgerät eines Händlers handeln. Das Mobilfunkendgerät des Käufers oder des Händlers wird dazu verwendet, eine Kommunikation mit dem Transaktionssteuerungssystem und/oder einem oder mehreren banktechnischen Systemen herzustellen und den Bezahlvorgang durchzuführen. Eine Zuordnung des verwendeten Mobilfunkendgeräts zu einem Empfängerkonto ist wichtig, da festgelegt werden muss, welchem Empfängerkonto die Zahlung, die über das Mobilfunkendgerät getätigt wird, gutgeschrieben werden soll.
e) Es werden nunmehr Transaktionsdaten, die insbesondere den Zahlbetrag umfassen, vom Transaktionssteuerungssystem an das Endgerät übertragen. Bei der Durchführung der Zahlung fließt diese Information, nämlich der Zahlbetrag, in die Abbuchung ein, die auf der Geldkarte vorgenommen wird.
   Beispielsweise kann der Zahlbetrag direkt über eine Datenverbindung an das Endgerät übertragen werden. Alternativ kann dieser, beispielsweise durch den Händler, in das Endgerät eingegeben werden.
f) Nun ist es möglich, den Zahlbetrag auf einer Anzeigevorrichtung am Endgerät, beispielsweise auf dem Display eines Mobilfunkendgeräts, anzuzeigen. Der Käufer legt nun seine Geld- oder sonstige Bankkarte an das Endgerät an und bestätigt hiermit die Zahlung. Alternativ kann zusätzlich zu dem Anlegen der Karte noch eine Tasten- oder Displayangabe erfolgen. Eine auf dem Endgerät befindliche Applikation kommuniziert nun mittels eines Nahfeldkommunikations-Verfahrens mit dieser Geld- oder Bankkarte und bucht den Zahlbetrag von der Geldkarte oder von einem der Bankkarte zugeordneten Konto ab bzw. veranlasst eine solche Abbuchung.
g) Der von der Geldkarte oder dem Konto abgebuchte Zahlbetrag wird dem Empfängerkonto, nämlich der Händlerkarte, gutgeschrieben, das dem Endgerät über den Referenzcode zugeordnet wurde.

Durch das beschriebene Verfahren ist es somit möglich, einen Bezahlvorgang bargeldlos und vor allem kontaktlos durchzuführen. Es ist somit nicht mehr erforderlich, eine Bank- oder Geldkarte in ein Bezahlterminal einzuführen. Darüber hinaus ist die Verwendung eines gesonderten Terminals überhaupt nicht mehr notwendig, da das Endgerät, beispielsweise ein Mobilfunkendgerät, des Käufers oder des Händlers die Funktion eines anonymen Terminals übernimmt. Die hierfür notwendige Software kann mittels einer Applikation bereitgestellt werden, die beispielsweise auf einem Mobilfunkendgerät abläuft. Bei dem Endgerät kann es sich jedoch auch um einen Laptop, einen PDA oder ähnliche Endgeräte handeln, die eine Kommunikation zur Geld- oder Bankkarte über ein Nahfeldkommunikationsverfahren herstellen können.

Das dargestellte Verfahren kann somit einerseits als Ersatz für bisherige kontaktbehaftete Bezahlverfahren in einem Ladengeschäft verwendet werden. Andererseits können Einkäufe, die über Fernkommunikationsmittel getätigt werden, z.B. Einkäufe in einem Online-Shop, durch das beschriebene Verfahren bezahlt werden, ohne dass hierfür eine gesonderte Infrastruktur notwendig wäre. Es ist lediglich notwendig, über ein Endgerät zu verfügen, das mit der Bank- oder Geldkarte kommunizieren kann. Hierbei kann es sich beispielsweise um ein NFC-fähiges Mobilfunkendgerät handeln. Moderne Mobilfunkendgeräte werden zukünftig immer häufiger NFC-fähig sein.

Es ist möglich, dass das Auswählen des Produkts und/oder das Übermitteln des Kaufwunsches gemäß Verfahrensschritt a) durch Fernkommunikationsmittel, insbesondere über das Internet, Telefon oder Telefax oder persönlich in einem Ladengeschäft, erfolgt.

Sofern das Auswählen des Produkts und/oder das Übermitteln des Kaufwunsches über Fernkommunikationsmittel stattfindet, werden hiernach folgende Verfahrensschritte durchgeführt:
Zunächst wird der Zahlbetrag durch ein Shopsystem des Händlers an das Transaktionssteuerungssystem übermittelt. Dies erfolgt insbesondere über eine feste URL.

Es wird ein Referenzcode generiert, der dem Empfängerkonto zugeordnet ist. Der Referenzcode kann zusätzlich der Einkaufstransaktion zugeordnet werden. Der Referenzcode wird an das Shopsystem des Händlers übertragen und anschließend dem Käufer über ein Fernkommunikationsmittel angezeigt oder dem Kunden mündlich mitgeteilt. Beispielsweise kann der Referenzcode dem Käufer mittels eines Internetbrowsers angezeigt werden. Der Internetbrowser kann beispielsweise derjenige Browser sein, mit dem der Käufer sein Produkt in einem Online-Shop ausgesucht hat.

Dieser Referenzcode wird durch den Käufer in eine Applikation auf seinem Endgerät, insbesondere auf seinem Mobilfunkendgerät, eingegeben. Das Eingeben des Referenzcodes in das Endgerät kann beispielsweise dadurch erfolgen, dass der Referenzcode durch eine Kamera im Endgerät von der Anzeige eines Internetbrowsers gescannt oder fotografiert wird und somit direkt in dem Mobilfunkendgerät vorhanden ist.

Anschließend wird der Referenzcode durch eine Applikation auf dem Endgerät an das Transaktionssteuerungssystem übermittelt. Dies erfolgt insbesondere über eine feste URL.

Der Referenzcode wird zusammen mit dem Zahlbetrag vom Transaktionssteuerungssystem an das Endgerät übermittelt.

Der Zahlbetrag wird auf eine Anzeigevorrichtung am Endgerät, beispielsweise auf dem Handy-Display, angezeigt.

Dieser Zahlbetrag wird durch den Käufer durch Anlegen der Geld- oder Bankkarte an das Endgerät bestätigt, so dass der Zahlvorgang initiiert wird.

Auf diese Weise ist es einfach möglich, Einkäufe, die beispielsweise in einem Internet-Shop oder im Katalog eines Versandhauses getätigt werden sollen, zu bezahlen.

Sofern das Auswählen des Produkts und/oder das Übermitteln des Kaufwunsches persönlich in einem Ladengeschäft stattfindet, werden hiernach folgende Verfahrensschritte durchgeführt:
- Zunächst wird eine Händlerapplikation auf einem Endgerät, insbesondere auf einem Mobilfunkendgerät eines Händlers, gestartet. Diese Händlerapplikation kann sich geringfügig von der bisher beschriebenen Applikation auf dem Mobilfunkendgerät eines Käufers unterscheiden.
- Die Händlerapplikation wird an dem Transaktionssteuerungssystem angemeldet. Dies kann beispielsweise einmalig am Anfang jeden Tages erfolgen.
- Ein Referenzcode wird vom Transaktionssteuerungssystem an das Endgerät des Händlers übermittelt. Dieser Referenzcode ist dem Empfängerkonto zugeordnet.
- Es wird der Zahlbetrag an die Händlerapplikation übermittelt oder in diese eingegeben. Beispielsweise kann der Zahlbetrag, z.B. von einem Kassensystem des Händlers, über eine Datenverbindung direkt an die Händlerapplikation übermittelt werden. Alternativ kann der Zahlbetrag beispielsweise vom Händler in die Händlerapplikation eingegeben werden. Auch ist es möglich, eine Applikation zu integrieren, durch die Barcodes von Produkten gescannt werden können, oder den Zahlbetrag über RFID zu übertragen, so dass es nicht notwendig ist, den Zahlbetrag manuell in die Händlerapplikation einzugeben.
- Dieser Zahlbetrag wird nun auf einer Anzeigevorrichtung am Endgerät angezeigt.
- Der angezeigte Zahlbetrag wird durch den Käufer durch Anlegen der Geld- oder Bankkarte an das Endgerät sowie ggf. durch eine weitere Tasten- oder Displayangabe bestätigt, so dass der Zahlvorgang initiiert wird.

Der vom Transaktionssteuerungssystem generierte Referenzcode kann für mehrere folgende Bezahlvorgänge gültig sein. Beispielsweise kann am Anfang eines Verkaufstages ein einmaliges Anmelden der Händlerapplikation am Transaktionssteuerungssystem stattfinden, so dass pro Tag ein einziges Mal ein Referenzcode an das Endgerät übermittelt wird. Dieser Referenzcode wird dazu verwendet, sämtliche Bezahlvorgänge, die an diesem Tag von diesem Endgerät getätigt werden, dem Empfängerkonto zuzuordnen, das diesem Referenzcode zugeordnet ist.

Durch das gerade beschriebene Verfahren ist es somit möglich, einen kontaktlosen bargeldlosen Bezahlvorgang in einem Ladengeschäft durchzuführen, durch den die bisher bekannte Kartenzahlung an einem Terminal ersetzt werden kann.

Im Rahmen des erfindungsgemäßen Verfahrens ist es ferner möglich, eine Geldkarte durch folgende Verfahrensschritte zu laden:
- Eine Applikation für den Ladevorgang der Geldkarte wird auf einem Endgerät, beispielsweise einem Mobilfunkendgerät eines Käufers oder Händlers gestartet.
- Diese Applikation meldet sich bei einem Transaktionssteuerungssystem, insbesondere über eine feste URL an.
- Der Ladevorgang kann beispielsweise durch einen Käufer manuell initiiert werden, sofern dieser wünscht, dass der Guthabenbetrag auf seiner Geldkarte erhöht wird. Alternativ kann der Ladevorgang automatisch angestoßen werden, wenn der Guthabenbetrag auf der Geldkarte für das Bezahlen eines gewünschten Einkaufs nicht ausreicht.
- Ein Referenzcode wird durch das Transaktionssteuerungssystem zu einer Applikation auf dem Endgerät übertragen.
- Die NFC-Chipkarte, die in dem Fall eine Geldkarte ist, wird an das NFC-fähige Endgerät angelegt, so dass der Ladevorgang gestartet wird. Der Ladebetrag ist hierbei festgelegt. Aufgrund gesetzlicher Bestimmungen ist es notwendig vor dem Laden einer Geldkarte per NFC einen Vertrag mit dem zuständigen Kreditinstitut zu schließen, in dem definiert ist, wie hoch der maximale Betrag ist, der pro Tag oder pro Ladevorgang geladen werden kann.
- Das Ladeverfahren und insbesondere die Kommunikation zwischen der Applikation auf dem Endgerät und dem Transaktionssteuerungssystem findet gemäß einem Mehrschrittladeverfahren statt, das aus dem Stand der Technik bekannt ist. Ein solches Mehrschrittladeverfahren ist beispielsweise im ZKA-Standard, Komponente "Laden von vorgemerktem Guthaben" (kontaktlos) definiert.

Als Transaktionssteuerungssystem zur Herstellung der Kommunikation zwischen dem Endgerät und einem Hintergrundsystem eines Bankinstituts kann beispielsweise die SIZCHIP-Plattform des SIZ Informatikzentrum der Sparkassenorganisation GmbH (SIZ) verwendet werden. Diese Softwareplattform wird vom SIZ und dem Deutschen Sparkassen Verlag als Produkt oder Dienstleistung angeboten und verbindet beispielsweise die Geldkarte eines Anwenders mit dem serverseitigen Sicherheitsmodul von Bankinstituten. Hierdurch können u.a. Funktionalitäten wie Geldbörse, Marktplatz, Altersverifikation usw. realisiert werden. Die Verbindung erfolgt über das Internet. Die Parameter der Transaktion werden durch die zweite Chipkarte abgeglichen, d.h. synchronisiert oder validiert.

Das Ergebnis des Bezahlvorgangs wird an die Anwendung des Produktanbieters, d.h. des Händlers gemeldet, der daraufhin dem Käufer das Produkt zugänglich machen kann. Die SIZCHIP-Plattform gliedert sich in eine serverseitige Anwendung und Frontend-Plugins für PC- und Mac-Betriebssysteme sowie für "Point of Sales"-Kassen.

Die SIZCHIP-Plattform kann ferner eine Software zum Laden einer Geldkarte bereitstellen. Hierbei wird die Chipkarte mit dem für die Ladevorgänge zuständigen Hintergrundsystem verbunden. Dadurch kann der Vorgang "Laden gegen Guthaben" nach den Standards der deutschen Kreditwirtschaft durchgeführt werden.

Bevorzugt umfasst die SIZCHIP-Plattform einen sogenannten SIZCHIP-Mobile Agent. Die Hauptaufgabe dieses Mobile Agent ist es, die Zahlungsdaten und das Empfängerkonto, beispielsweise die Internetadresse zur Händlerkarte des Web-Shops, an die Applikation auf dem Endgerät zu übertragen.

Ein Zahlungsvorgang kann bevorzugt nur dann ausgeführt werden, wenn im Endgerät der Zahlungsbetrag vorhanden ist und eine Internetverbindung zur SIZCHIP-Plattform mit der entsprechenden Händlerkarte für das Geldkarte-Hintergrundsystem der deutschen Kreditwirtschaft vorhanden ist.

Um eine Geldkarte zu laden, kann der Mobile Agent, sofern mehrere SIZCHIP-Plattformen für das Laden an einem NFC-Handy im Internet vorhanden sind, eine eindeutige Verbindung herstellen. Diese Auswahl erfolgt für den Anwender transparent im Hintergrund.

Im Folgenden werden bevorzugte Ausführungsformen der Erfindung anhand von Figuren erläutert.

Es zeigen:
- Figur 1: eine schematische Ansicht eines Systems zum Durchführen des erfindungsgemäßen Verfahrens,
- Figur 2: eine Darstellung der Verfahrensschritte für den Anwendungsfall "Remote Payment",
- Figur 3: eine Darstellung der Verfahrensschritte für einen Ladevorgang einer Geldkarte,
- Figur 4: eine Darstellung der Verfahrensschritte für den Anwendungsfall "Proximity Payment".

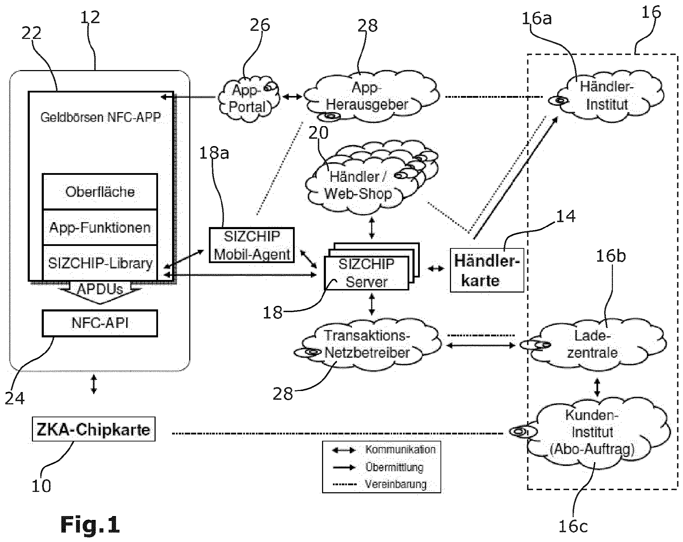

Figur 1 stellt schematisch ein System dar, auf dem das erfindungsgemäße Verfahren durchgeführt werden kann. Eine Geld- oder Bankkarte 10 ist über den NFC-Kommunikation mit einem Mobilfunkendgerät 12, beispielsweise einem Smartphone, verbindbar. Auf diesem Smartphone ist eine Geldbörsen-NFC-Applikation 22 installiert. Diese schließt eine grafische Oberfläche, verschiedene Applikationsfunktionen sowie eine SIZCHIP-Library ein.

Die NFC-Applikation 22 kommuniziert mit dem Mobilfunkendgerät 12 über das NFC-API 24 und verwendet sogenannte Application Protocol Data Units.

Die NFC-Applikation 22 kann einem Benutzer, beispielsweise über ein Applikationsportal 26 zur Verfügung gestellt werden, in das sie vom Applikationsherausgeber 28 geladen wurde.

Die NFC-Applikation 22 kommuniziert über den SIZCHIP-Mobile-Agent 18a und den SIZ-Server 18 einerseits mit dem Händler bzw. dem Web-Shop des Händlers 20. Hierüber findet auch eine Kommunikation zum Bankinstitut 16a des Händlers statt. Als Empfängerkonto 14 ist hierbei eine Händlerkarte dargestellt, auf der der Zahlbetrag gutgeschrieben wird. Diese Händlerkarte 14 wird vom Händlerinstitut 16a verwaltet.

Zum Sichern der Richtigkeit der durchgeführten Zahlungen können sowohl zu der Geldkarte 10 als auch zu der Händlerkarte 14 auf den jeweiligen Bankinstituten 16a, 16c sogenannte Schattenkonten geführt werden, auf denen sämtliche Buchungen, die auf den Karten durchgeführt werden, nachvollzogen werden.

Der SIZCHIP-Mobile-Agent 18a und der SIZCHIP-Server 18 bilden das Transaktionssteuerungssystem, über das die Applikation 22 mit dem Hintergrundsystem 16 kommuniziert. Dieses besteht aus dem Händlerinstitut 16a, dem Bankinstitut des Kunden 16c sowie der Ladezentrale 16b.

Die Ladezentrale 16b ist über einen Transaktionsnetzbetreiber 28 mit dem SIZCHIP-Server 18 verbunden.

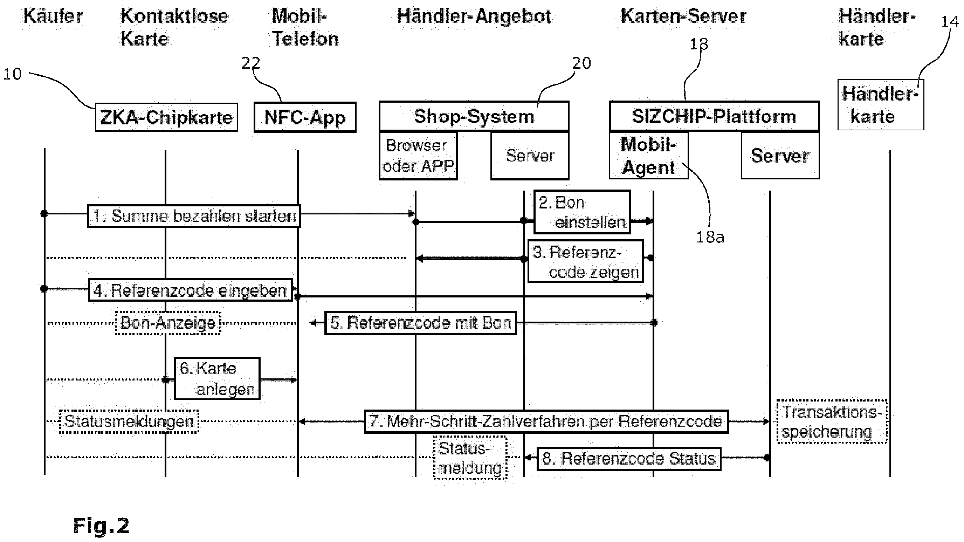

Figur 2 stellt die Verfahrensschritte für den Anwendungsfall "Remote-Payment" dar. Remote-Payment bedeutet, dass ein bargeldloser Bezahlvorgang durchgeführt werden soll, wobei das Auswählen des Produkts und/ oder das Übermitteln des Kaufwunsches durch Fernkommunikationsmittel, beispielsweise im Internet stattgefunden hat. Der Käufer hat im Shopsystem 20 des Händlers den Warenkorb gefüllt und möchte den Zahlbetrag entrichten. Der Webshop 20 bietet die Bezahlart "Bezahlen mit Geldbörse per NFC-Handy" an, die vom Kunden ausgewählt wird.

Nun wird der Zahlbetrag durch das Shopsystem 20 an die SIZCHIP-Plattform übermittelt. Der Mobile Agent 18a erzeugt den Referenzcode, während der Rest der SIZCHIP-Plattform 18 die Transaktion abwickelt.

Die SIZCHIP-Plattform generiert einen Referenzcode, der dem Empfängerkonto, nämlich der Händlerkarte 14 und dem Zahlbetrag, zugeordnet ist. Der Referenzcode wird an das Shopsystem 20 des Händlers übertragen und anschließend dem Käufer beispielsweise über den Internetbrowser angezeigt. Gemäß Verfahrensschritt 4 wird dieser Referenzcode durch den Käufer in die Applikation 22, die auf seinem Endgerät 12, beispielsweise seinem Mobiltelefon installiert ist, eingegeben. Das Eingeben kann manuell erfolgen oder beispielsweise dadurch, dass der Referenzcode von der Anzeige des Internetbrowsers durch eine Handykamera fotografiert wird und somit direkt in das Mobiltelefon geladen wird.

Der Referenzcode wird durch die Applikation 22 an die SIZCHIP-Plattform übermittelt.

Gemäß Verfahrensschritt 5 wird der Referenzcode zusammen mit dem Zahlbetrag und gegebenenfalls weiterer Informationen von der SIZCHIP-Plattform an das Endgerät 12 übermittelt. Diese weiteren Informationen können beispielsweise ähnlich einem Kassenbon sein und die einzelnen Positionen des Kaufs inklusiv der einzelnen Beträge enthalten.

Optional kann am Endgerät 12, beispielsweise auf dem Handydisplay der Zahlbetrag angezeigt werden. Dieser Verfahrensschritt ist in Figur 2 gestrichelt dargestellt.

Der Zahlbetrag wird durch den Käufer durch Anlegen der Geldkarte 10 an das Endgerät 12 bestätigt, so dass der Zahlvorgang initiiert wird.

Gemäß Verfahrensschritt 7 findet nun ein Mehrschritt-Zahlverfahren unter Verwendung des Referenzcodes statt. Dieses Zahlverfahren ist aus dem Stand der Technik bekannt und beispielsweise im ZKA-Standard, Händlerkarte inklusiv virtueller Händlerkarte und Händlersysteme definiert.

Der Status der Transaktion, die durch den Referenzcode identifiziert wurde, wird gemäß Verfahrensschritt 8 von der SIZCHIP-Plattform 18 dem Händlershop 20 zurückgemeldet. Zusätzlich kann optional eine Transaktionsspeicherung stattfinden.

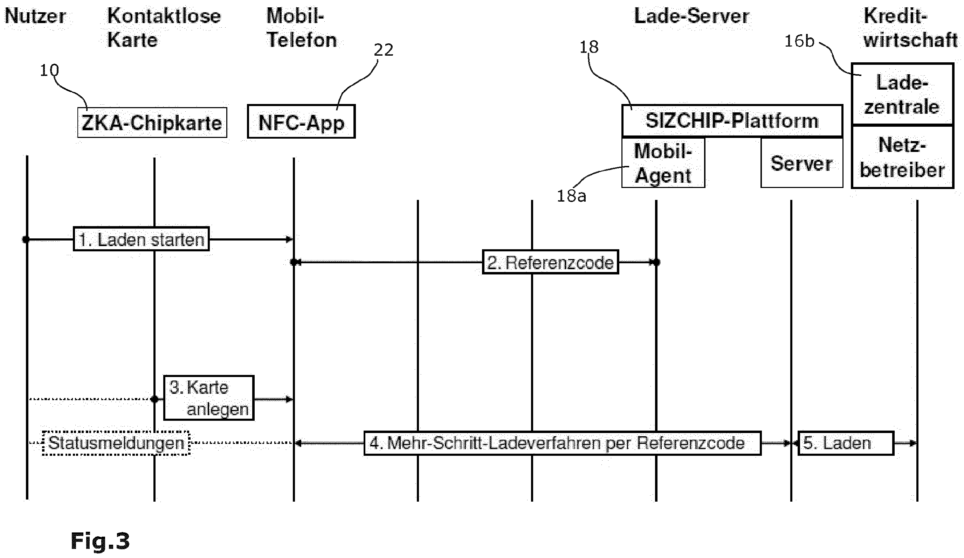

Figur 3 stellt die Verfahrensschritte für einen Ladevorgang einer Geldkarte dar. Zunächst wird eine Applikation für den Ladevorgang der Geldkarte 10 auf dem Endgerät 12 gestartet. Diese Applikation 22 meldet sich bei einem Transaktionssteuerungssystem 18, 18a, in diesem Fall bei der SIZCHIP-Plattform an. Diese Anmeldung kann darin bestehen, dass die Applikation 22 lediglich einen Referenzcode von der SIZCHIP-Plattform anfordert. Der Referenzcode wird von der SIZCHIP-Plattform 18 zur Applikation 22 übermittelt. Der Nutzer legt nun seine Geldkarte 10 an das Mobiltelefon 12 an, wodurch der Ladevorgang initiiert wird. Gemäß den Verfahrensschritten 4 und 5 in Figur 3 findet nun ein Mehrschrittladeverfahren unter Verwendung des Referenzcodes statt. Der Verfahrensschritt 5 kennzeichnet hierbei die Kommunikation mit der zuständigen Ladezentrale. Diese bildet das Sicherheitsgegenstück für die Ladefunktion und erfüllt somit dieselbe Funktion wie die zweite Chipkarte 14 bei den anderen Verfahren gemäß der Erfindung. Die Funktion der zweiten Chipkarte 14 kann somit im Anwendungsfall Laden, durch die Ladezentrale 16b übernommen werden.

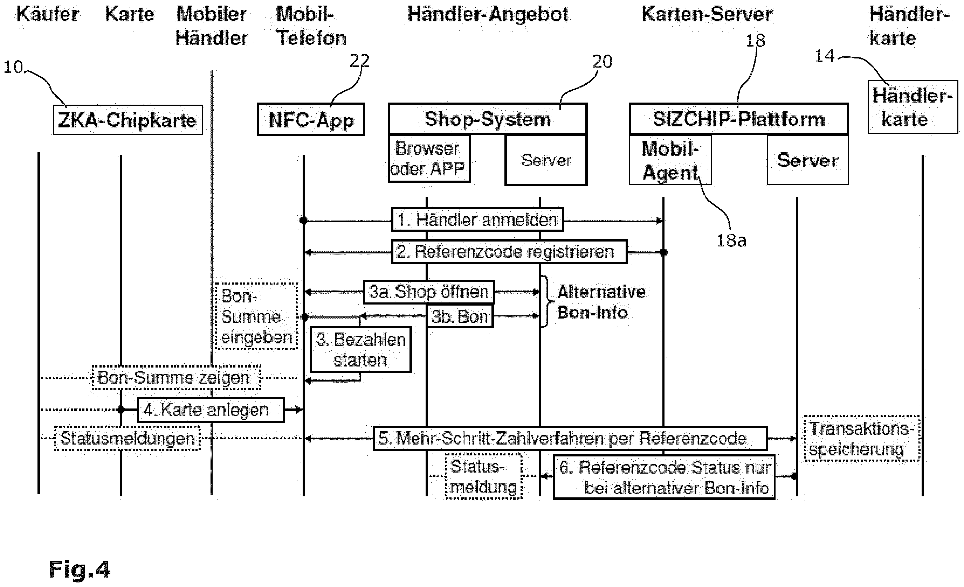

Figur 4 ist eine Darstellung der Verfahrensschritte für den Anwendungsfall "Proximity-Payment". Hierbei erfolgt das Auswählen des Produkts und/ oder das Übermitteln des Kaufwunsches durch den Käufer persönlich in einem Ladengeschäft. Als Endgerät wird vorzugsweise ein Mobiltelefon oder anderes Endgerät 12 des Händlers verwendet. Hierauf ist ebenfalls eine Applikation 22 installiert.

Es wird die NFC-Applikation 22 auf dem Endgerät 12 des Händlers gestartet. Diese Applikation 22 wird an der SIZCHIP-Plattform 18 und insbesondere beim Mobileagent 18a angemeldet. Dies kann beispielsweise einmalig am Anfang jeden Tages erfolgen.

Ein Referenzcode wird von der SIZCHIP-Plattform 18 an das Endgerät 12 übermittelt. Dieser ist der Händlerkarte 14 zugeordnet.

Der Zahlbetrag für das ausgewählte Produkt wird nun in die Applikation 22 durch den Händler eingegeben. Alternativ kann der Zahlbetrag auch über eine Datenverbindung direkt an die Händlerapplikation 22 übermittelt werden. Diese Verfahrensschritte sind mit 3a und 3b als alternative Bon-Info gekennzeichnet.

Der Zahlbetrag wird nun auf einer Anzeigevorrichtung am Endgerät 12 angezeigt.

Gemäß Verfahrensschritt 4 wird der angezeigte Zahlbetrag nun durch den Käufer durch Anlegen der Geldkarte 10 an das Endgerät 12 bestätigt, so dass der Zahlvorgang initiiert wird.

Nun findet ein Mehrschritt-Zahlverfahren unter Verwendung des Referenzcodes statt, das ebenfalls aus dem oben genannten ZKA-Standard bekannt ist.

Sofern die Information über den Zahlbetrag gemäß den Verfahrensschritten 3a und 3b vom Händlershop 20 an die NFC-Applikation 22 übermittelt wurde, wird nach erfolgreich durchgeführtem Zahlverfahren der Status der Transaktion dem Shopsystem 20 zurückgemeldet (siehe Verfahrensschritt 6).

Bei einer weiteren Ausführungsform des erfindungsgemäßen Verfahrens ist die durchzuführende Transaktion die Überprüfung des Alters einer ersten Person. Hierbei kann die erste Chipkarte 10 ein Altersmerkmal dieser Person speichern. Die Person stößt auf einem Endgerät 12 oder in einem Internetshop 20 die Altersverifikation an. Ähnlich dem oben beschriebenen Bezahlvorgang wird ein Referenzcode generiert. Dies kann beispielsweise über eine Händlerapplikation oder Kundenapplikation auf dem Endgerät 12 stattfinden. Die Chipkarte 10 wird an das Endgerät 12 angelegt. In einem Mehrschritt-Transaktionsverfahren wird das auf der Chipkarte 10 gespeicherte Altersmerkmal abgeglichen. Eine Überprüfung dieses Abgleichs erfolgt durch Daten, die auf der zweiten Chipkarte 14 gespeichert sind. Das Ergebnis dieses Abgleichs kann für weitere Prozesse, wie beispielsweise das Bezahlen von Leistungen, benutzt werden.

Bei einer weiteren Ausführungsform des erfindungsgemäßen Verfahrens findet als Transaktion ein Login-Vorgang einer Person statt. Hierbei erfolgt eine Überprüfung von einer zuvor registrierten Identität. Die Chipkarte 10 enthält eine eindeutige Identität, die vor Anmeldevorgängen registriert werden kann. Die erste Person initiiert auf dem Endgerät 12 oder in einer Internetanwendung einen Login-Vorgang mit einem Passwort. Ein Referenzcode wird ähnlich zu dem oben beschriebenen Bezahlverfahren generiert. Dies kann erneut durch eine Händlerapplikation oder eine Kundenapplikation auf dem Endgerät 12 stattfinden. Die Chipkarte 10 wird nun am Endgerät 12 angelegt, so dass durch ein Mehrschritt-Transaktionsverfahren die Kartenidentität abgeglichen wird. Auch hier erfolgt der Abgleich unter Berücksichtigung von Daten, die auf der zweiten Chipkarte 14 gespeichert sind. Mit Hilfe der Kartenidentität wird der Benutzer oder die erste Person ermittelt und mit dem Passwort angemeldet.

Eine weitere Ausführungsform des erfindungsgemäßen Verfahrens ermöglicht die Erzeugung einer TAN unter Verwendung von Eingabedaten. Die Chipkarte 10 enthält hierbei die Funktion TAN-Generierung. Der Benutzer initiiert auf einem Endgerät 12 oder in einer Internetanwendung eine TAN-Anfrage zu seinen Eingabedaten. Auch hier wird ein Referenzcode gemäß den bisher beschriebenen Verfahren generiert. Die Chipkarte 10 wird nun am Endgerät 12 angelegt, wonach aus Eingabedaten mittels eines TAN-Generators auf der persönlichen Chipkarte ein Kryptogramm zur TAN-Erzeugung generiert wird. Die TAN wird am Endgerät 12 angezeigt und kann zur Absicherung der Eingabedaten genutzt werden oder automatisch weitergeleitet werden.

Eine weitere Ausführungsform des erfindungsgemäßen Verfahrens ermöglicht es, Daten, die beispielsweise Gutscheine, Tickets, Bonuspunkte oder Ähnliches (Inhalte eines Marktplatzes) repräsentieren, mit den entsprechenden Emittenten auszutauschen. Die Chipkarte 10 kann emittentenbezogen Daten speichern. Die erste Person stößt auf einem Endgerät 12 oder in einem Internetshop das Abrufen/Einlösen von Inhalten des Marktplatzes an. Ähnlich den oben beschriebenen Verfahren wird der Referenzcode generiert. Anschließend wird die Chipkarte 10 an das Endgerät 12 angelegt, wonach das Mehrschritt-Transaktionsverfahren die Inhalte des Marktplatzes abgleicht. Das Ergebnis des Abgleichs kann für weitere Prozesse genutzt werden, wie beispielsweise das Bezahlen von Leistungen, das Sammeln von Bonuspunkten, das Vorzeigen von Tickets usw..

## Patentansprüche

1. Verfahren zum datentechnischen Zuordnen eines nicht personenbezogenen NFC-fähigen Endgerätes (12) und einer datentechnisch mit diesem verbindbaren NFC-Chipkarte (10) zu einer Transaktion, bei der datentechnisch auf die NFC-Chipkarte (10) und eine zweite Chipkarte (14) zugegriffen wird,
wobei die Art der durchzuführenden Transaktion durch eine erste Instanz, nämlich eine erste Person, ausgewählt wird,
wobei das Verfahren die folgenden Schritte aufweist:
a) Übertragen von Transaktionsdaten, die für die Transaktion relevant sind, über eine kabellose oder kabelgebundene Datenverbindung von einer weiteren Instanz an ein Transaktionssteuerungssystem (18, 18a)
b) Generieren eines der Transaktion zugeordneten Referenzcodes, insbesondere unter Mitwirkung des Transaktionssteuerungssystems (18, 18a), wobei der Referenzcode auf dem Transaktionssteuerungssystem (18, 18a) der zweiten Chipkarte (14) zugeordnet ist und der Referenzcode vom Transaktionssteuerungssystem (18, 18a) oder von einer anderen Komponente, die den Referenzcode generiert hat, an die weitere Instanz übermittelt wird und durch diese an die erste Person weitergegeben wird, wonach der Referenzcode durch die erste Person in das Endgerät übertragen wird.
c) Übermitteln des Referenzcodes vom Endgerät (12) über eine kabellose oder kabelgebundene Datenverbindung zum Transaktionssteuerungssystem (18, 18a) und Zuordnen des zum Zeitpunkt des Durchführens der Transaktion bei der ersten Person befindlichen Endgeräts (12) zur zweiten Chipkarte (14) und zur durchzuführenden Transaktion, wobei dieses Zuordnen durch den vom Endgerät (12) zum Transaktionssteuerungssystem (18, 18a) übermittelten Referenzcode erfolgt,
d) Übertragen der Transaktionsdaten vom Transaktionssteuerungssystem (18, 18a) an das Endgerät über eine kabellose oder kabelgebundene Datenverbindung, wobei die Transaktionsdaten ausschließlich derjenigen Transaktion übertragen werden, die durch den vom Endgerät (12) übertragenen Referenzcode im Rahmen von Verfahrensschritt c) dem Endgerät (12) zugeordnet wurde,
e) Anlegen der NFC-Chipkarte (10) an das Endgerät (12), wodurch die Transaktion gestartet wird,
f) Durchführen der Transaktion, wobei über das Endgerät (12), an dem die NFC-Chipkarte (10) angelegt wurde und das über den Referenzcode der zweiten Chipkarte (14) zugeordnet wurde, datentechnisch auf die NFC-Chipkarte (10) zugegriffen wird und durch das Transaktionssteuerungssystem (18,18a) datentechnisch auf die zweite Chipkarte (14) zugegriffen wird.

2. Verfahren nach Anspruch 1, **dadurch gekennzeichnet, dass** der Referenzcode für mehrere folgende Transaktionen über einen begrenzten oder unbegrenzten Zeitraum gültig ist.

3. Verfahren nach Anspruch 1, **dadurch gekennzeichnet, dass** der Referenzcode einmalig für eine Transaktion gültig ist.

4. Verfahren nach einem der Ansprüche 1 bis 3, **dadurch gekennzeichnet, dass** der Referenzcode in Form von Schriftzeichen ausgegeben und insbesondere durch die zweite Instanz an die erste Person weitergegeben und in das Endgerät (12) eingegeben wird.

5. Verfahren nach einem der Ansprüche 1 bis 3, **dadurch gekennzeichnet, dass** der Referenzcode in Form eines optischen Musters, insbesondere eines Barcodes, ausgegeben und insbesondere durch die zweite Instanz an die erste Person weitergegeben wird, und das Endgerät (12) eine Aufnahmevorrichtung zum Aufnehmen des optischen Musters aufweist.

6. Verfahren nach einem der Ansprüche 1 bis 3, **dadurch gekennzeichnet, dass** der Referenzcode über eine RFID-Antenne mittelbar vom Transaktionssteuerungssystem (18, 18a) ausgegeben und insbesondere durch die zweite Instanz an die erste Person weitergegeben wird und das Endgerät (12) einen NFC-Empfänger zum Empfangen des RFID-Signals aufweist.

7. Verfahren nach einem der Ansprüche 1 bis 6, **dadurch gekennzeichnet, dass** vor der Durchführung der von der ersten Person ausgewählten Transaktion Transaktionsdaten auf einer Aufzeige des Endgeräts (12) angezeigt werden.

8. Verfahren nach einem der Ansprüche 1 bis 7, wobei die erste Person ein Käufer und die weitere Instanz ein Händler, die NFC-Chipkarte (10) eine Geldkarte oder eine sonstige Bankkarte und die zweite Chipkarte (14) eine Händlerkarte ist,
wobei ein zu zahlendes Produkt durch einen Käufer ausgewählt und durch den Käufer ein Kaufwunsch an den Händler übermittel wird,
**gekennzeichnet durch** die folgenden Verfahrensschritte, deren Nummerierung der Nummerierung der Verfahrensschritte aus Anspruch 1 entspricht:
a) Übertragen eines Zahlbetrags für ein ausgewähltes Produkt durch den Händler an das Transaktionssteuerungssystem (18, 18a),
b) Generieren eines Referenzcodes durch das Transaktionssteuerungssystem (18, 18a) oder eine andere Komponente unter Mitwirkung des Transaktionssteuerungssystems, wobei der Referenzcode auf dem Transaktionssteuerungssystem (18, 18a) der Händlerkarte (14) zugeordnet ist und mittelbar an das Endgerät übertragen wird,
c) Übermitteln des Referenzcodes vom Endgerät (12) zum Transaktionssteuerungssystem (18, 18a), so dass das Endgerät (12) der Händlerkarte (14) zugeordnet wird,
d) Übertragung von Transaktionsdaten, die den Zahlbetrag umfassen, vom Transaktionssteuerungssystem (18, 18a) an das Endgerät (12),
e) Anlegen der Geld- oder sonstigen Bankkarte (10) durch den Käufer an das Endgerät (12), wobei eine auf dem Endgerät (12) befindliche Applikation (22) mittels eines NFC-Verfahrens mit dieser Geld- oder Bankkarte (10) kommuniziert und den Zahlbetrag von der Geldkarte oder von einem der Bankkarte (10) zugeordneten Konto abbucht oder eine solche Abbuchung veranlasst,
f) Gutschreiben des von der Geldkarte oder dem Konto abgebuchten Zahlbetrags auf die Händlerkarte (14), die dem Endgerät (12) über den Referenzcode zugeordnet wurde.

9. Verfahren nach Anspruch 8, **dadurch gekennzeichnet, dass** das Auswählen des Produkts und/oder das Übermitteln des Kaufwunsches gemäß Verfahrensschritt a) durch Fernkommunikationsmittel, insbesondere über das Internet, Telefon oder Telefax, oder persönlich in einem Ladengeschäft erfolgt.

10. Verfahren nach Anspruch 9, **dadurch gekennzeichnet, dass** nach dem Auswählen des Produkts und/oder einem Übermitteln des Kaufwunsches über Fernkommunikationsmittel folgende Verfahrensschritte durchgeführt werden:
- Übermitteln des Zahlbetrags durch ein Shopsystem des Händlers an das Transaktionssteuerungssystem (18, 18a),
- Generieren eines Referenzcodes, der dem Empfängerkonto und dem Zahlbetrag zugeordnet ist,
- Übertragen des Referenzcodes an das Shopsystem des Händlers, wobei dieser anschließend dem Käufer über ein Fernkommunikationsmittel angezeigt oder mündlich mitgeteilt wird,
- Eingeben des Referenzcodes durch den Käufer in die Applikation (22) auf seinem Endgerät (12),
- Übermitteln des Referenzcodes durch die Applikation (22) auf dem Endgerät (12) an das Transaktionssteuerungssystem (18, 18a),
- Übermitteln des Referenzcodes zusammen mit dem Zahlbetrag vom Transaktionssteuerungssystem (18, 18a) an das Endgerät (12),
- Anzeigen des Zahlbetrags auf einer Anzeigevorrichtung am Endgerät (12),
- Bestätigen des Zahlbetrags durch den Käufer durch Anlegen der Geld- oder Bankkarte (10) an das Endgerät (12), so dass ein Zahlvorgang initiiert wird.

11. Verfahren nach Anspruch 9, **dadurch gekennzeichnet, dass** dass nach einem Auswählen des Produkts und/oder Übermitteln des Kaufwunsches persönlich in einem Ladengeschäft folgende Verfahrensschritte durchgeführt werden:
- Starten einer Händlerapplikation (22) auf einem Endgerät (12), insbesondere auf einem Mobilfunkendgerät eines Händlers,
- Anmelden dieser Händlerapplikation an einem Transaktionssteuerungssystem (18, 18a),
- Übermitteln einer Referenzcode vom Transaktionssteuerungssystem (18, 18a) an das Endgerät (12) des Händlers, wobei dieser Referenzcode der Händlerkarte (14) zugeordnet ist,
- Übermitteln oder Eingeben des Zahlbetrags in die Händlerapplikation (22),
- Anzeigen des Zahlbetrags auf einer Anzeigevorrichtung am Endgerät (12),
- Bestätigen des Zahlbetrags durch den Käufer durch Anlegen der Geld- oder Bankkarte (10) an das Endgerät (12), so dass ein Zahlvorgang initiiert wird.

## Claims

1. A method for data-related allocation of an non-person-related NFC-enabled terminal (12) and an NFC chip card (10) suited for data-related connection to said terminal, to a transaction wherein a data access is made to the NFC chip card (10) and a second chip card (14),
wherein the type of the transaction to be performed is selected by a first instance, namely a first person,
wherein the method comprises the following steps:
a) transmission of transaction data which are relevant for the transaction, via a wireless or wired data link, from a further instance to a transaction control system (18, 18a),
b) generating a reference code allocated to the transaction, particularly under cooperation of the transaction control system (18, 18a), wherein the reference code on the transaction control system (18, 18a) is allocated to the second chip card (14), and wherein the reference code is transmitted from the transaction control system (18, 18a) or from another component that has generated the reference code to the further instance and by this further instance is passed on to the first person, whereupon the reference code is passed by the first person to the terminal,
c) transmission of the reference code from the terminal (12) via a wireless or wired data link to the transaction control system (18, 18a), and allocating the terminal (12) being with the first person at the time of performing the transaction to the second chip card (14) and to the to-be-performed transaction, wherein this assignment is performed by the reference code transmitted from the terminal (12) to the transaction control system (18, 18a),
d) transmission of the transaction data from the transaction control system (18, 18a) to the terminal via a wireless or wired data link, wherein the transaction data exclusively of that transaction are transmitted which was allocated to the terminal (12) within the method step c) by the reference code transmitted from the terminal (12),
e) applying the NFC chip card (10) to the terminal (12) whereby the transaction is started,
f) performing the transaction, wherein, via the terminal (12) to which the NFC chip card (10) was applied and which was allocated to the second chip card (14) via the reference code, data-related access is made to the NFC chip card (10) and wherein, via the transaction control system (18, 18a), data-related access is made to the second chip card (14).

2. The method according to claim 1, **characterized in that** the reference code is valid for a plurality of transactions over a limited or unlimited time period.

3. The method according to claim 1, **characterized in that** the reference code is valid once for one transaction.

4. The method according to any one of claims 1 to 3, **characterized in that** the reference code is output in the form of characters and particularly is passed on to the first person by the second instance and is input into the terminal (12).

5. The method according to any one of claims 1 to 3, **characterized in that** the reference code is output in the form of an optical pattern, particularly a barcode, and particularly is passed on to the first person by the second instance, and that the terminal (12) comprises a capturing device for capturing the optical pattern.

6. The method according to any one of claims 1 to 3, **characterized in that**, via an RFID antenna, the reference code is output indirectly by the transaction control system (18, 18a) and particularly is passed on to the first person by the second instance, and that the terminal (12) comprises an NFC receiver for receiving the RFID signal.

7. The method according to any one of claims 1 to 6, **characterized in that**, prior to performing the transaction selected by the first person, transaction data are displayed on a display of the terminal (12).

8. The method according to any one of claims 1 to 7, wherein the first person is a buyer and the further instance is a retailer, the NFC chip card (10) is a cash card or other bank card, and the second chip card (14) is a retailer card,
wherein a product to be paid is selected by a buyer and, by the buyer, a buying intention is transmitted to the retailer,
**characterized by** the following method steps, their numbering corresponding to the numbering of the method steps of claim 1:
a) transmission of a payable amount for a selected product by the retainer to the transaction control system (18, 18a),
b) generating a reference code by the transaction control system (18, 18a) or by another component under cooperation of the transaction control system, wherein the reference code on the transaction control system (18, 18a) is allocated to the retailer card (14) and will be indirectly transmitted to the terminal,
c) transmission of the reference code from the terminal (12) to the transaction control system (18, 18a) so as to allocate the terminal (12) to the retailer card (14),
d) transmission of transaction data including the payable amount from the transaction control system (18, 18a) to the terminal (12),
e) applying the cash card or other bank card (10), by the buyer, to the terminal (12), wherein an application (22) arranged on the terminal (12) communicates with this cash or bank card (10) by means of an NFC method and deducts the payable amount from the cash card or from an account associated to the bank card (10) or initiates such a deduction,
f) crediting the payable amount deducted from the cash card or the account to the retailer card (14) which was allocated to the terminal (12) via the reference code.

9. The method according to claim 8, **characterized in that** the selecting of the product and/or the transmitting of the buying intention according to method step a) are performed by telecommunication means, particularly via Internet, telephone or telefax, or personally in a retail store.

10. The method according to claim 9, **characterized in that**, after selecting the product and/or transmitting the buying intention, the following method steps are performed via telecommunication means:
- transmitting the payable amount, by a shop system of the retailer, to the transaction control system (18, 18a),
- generating a reference code allocated to the receiver account and to the payable amount,
- transmitting the reference code to the shop system of the retailer, wherein the reference code is subsequently displayed to the buyer by a telecommunication means or is orally communicated,
- inputting the reference code, by the buyer, into the application (22) on the terminal (12) of the buyer,
- transmitting the reference code, by the application (22) on the terminal (12), to the transaction control system (18, 18a),
- transmitting the reference code together with the payable amount from the transaction control system (18, 18a) to the terminal (12),
- displaying the payable amount on a display device on the terminal (12),
- confirming the payable amount by the buyer by applying the cash card or other bank card (10) to the terminal (12) so that a payment process is initiated.

11. The method according to claim 9, **characterized in that**, after selecting the product and/or transmitting the buying intention, the following method steps are performed personally in a retail store:
- starting a retailer application (22) on a terminal (12), particularly on a mobile terminal of a retailer,
- registration of this retailer application at a transaction control system (18, 18a),
- transmitting a reference code from the transaction control system (18, 18a) to the terminal (12) of the retailer, said reference code being allocated to the retailer card (14).
- transmitting or entering the payable amount into the retailer application (22),
- displaying the payable amount on a display device on the terminal (12),
- confirmation of the payable amount by the buyer by applying the cash or bank card (10) to the terminal (12) so that a paying process is initiated.

## Revendications

1. Procédé destiné à l'attribution informatique d'un terminal non personnel compatible CMFI (12) et d'une carte à puce CCP (10) pouvant être connectée à celui-ci pour une transaction, au cours de laquelle un accès à la carte à puce CCP (10) et à une deuxième carte à puce (14) se produit,
dans lequel le type de transaction à effectuer est sélectionné par une première instance, à savoir une première personne,
dans lequel le procédé comprend les étapes suivantes :
a) transmission des données transactionnelles pertinentes pour cette transaction, par le biais d'une connexion de données sans fil ou filaire, depuis une instance supplémentaire à un système de gestion de transaction (18, 18a)
b) génération d'un code de référence attribué à la transaction, en particulier par l'intermédiaire du système de gestion de transaction (18, 18a), dans lequel le code de référence est attribué à la deuxième carte à puce (14) sur le système de gestion de transaction (18, 18a) et le code de référence du système de gestion de transaction (18, 18a) ou d'un autre composant ayant généré le code de référence est communiqué à l'instance supplémentaire et transmis par celle-ci à la première personne, après quoi le code de référence est transmis au terminal par la première personne.
c) communication du code de référence depuis le terminal (12) au système de gestion de transaction (18, 18a) par le biais d'une connexion de données sans fil ou filaire, et attribution du terminal (12) situé près de la première personne au moment où la transaction est effectuée à la deuxième carte à puce (14) et à la transaction en cours, dans lequel cette attribution s'ensuit par le biais du code de référence communiqué au système de gestion de transaction (18, 18a) par le terminal (12),
d) transmission des données transactionnelles depuis le système de gestion de transaction (18, 18a) au terminal par le biais d'une connexion de données sans fil ou filaire, dans lequel seules sont transmises les données transactionnelles de la transaction attribuée au terminal (12) par le biais du code de référence transmis par le terminal (12) dans le cadre de l'étape c),
e) placement de la carte à puce CCP (10) sur le terminal (12), par le biais de quoi la transaction est initiée,
f) exécution de la transaction, dans lequel un accès informatique à la carte à puce CCP (10) se produit par l'intermédiaire du terminal (12) sur lequel est placée la carte à puce CCP (10) et qui est attribué à la seconde carte à puce (14) par l'intermédiaire du code de référence, et dans lequel un accès informatique à la seconde carte à puce (14) se produit par le biais du système de gestion de transaction (18, 18a).

2. Procédé selon la revendication 1, **caractérisé en ce que** le code de référence est valable pour plusieurs transactions subséquentes sur un intervalle de temps limité ou illimité.

3. Procédé selon la revendication 1, **caractérisé en ce que** le code de référence est valable une seule fois pour une transaction.

4. Procédé selon l'une des revendications 1 à 3, **caractérisé en ce que** le code de référence est émis sous forme de caractères et en particulier communiqué à la première personne par le biais de la deuxième instance et saisi dans le terminal (12).

5. Procédé selon l'une des revendications 1 à 3, **caractérisé en ce que** le code de référence est émis sous forme d'un motif optique, en particulier un code-barres et en particulier communiqué à la première personne par le biais de la deuxième instance et **en ce que** le terminal (12) comporte un dispositif d'enregistrement pour l'enregistrement du motif optique.

6. Procédé selon l'une des revendications 1 à 3, **caractérisé en ce que** le code de référence est émis indirectement par le système de gestion de transaction (18, 18a) par le biais d'une antenne RFID et en particulier communiqué à la première personne par le biais de la deuxième instance et **en ce que** le terminal (12) comporte un récepteur RFID pour la réception du signal RFID.

7. Procédé selon l'une des revendications 1 à 6, **caractérisé en ce que** les données transactionnelles sont indiquées sur un affichage du terminal (12) préalablement à l'exécution de la transaction sélectionnée par la première personne.

8. Procédé selon l'une des revendications 1 à 7, **caractérisé en ce que** la première personne est un client et l'instance supplémentaire est un commerçant, la carte à puce CCP (10) est un portemonnaie électronique ou une autre carte bancaire et la deuxième carte à puce est une carte de commerçant,
dans lequel un produit à payer est sélectionné par un client et une intention d'achat est communiquée par le client au commerçant,
**caractérisé par** les étapes de procédé suivantes, dont la numérotation correspond à la numérotation des étapes de procédé de la revendication 1 :
a) transmission par le commerçant au système de gestion de transaction (18, 18a) d'un montant à payer pour un produit sélectionné,
b) génération, par le système de gestion de transaction (18, 18a) ou par un autre composant par l'intermédiaire du système de gestion de transaction (18, 18a), d'un code de référence, dans lequel le code de référence est attribué à la carte de commerçant (14) sur le système de gestion de transaction (18, 18a) et est transmis indirectement au terminal,
c) communication au système de gestion de transaction (18, 18a) du code de référence depuis le terminal (12), de sorte que le terminal (12) est attribué à la carte de commerçant (14),
d) transmission au terminal (12) des données transactionnelles, lesquelles incluent le montant à payer, depuis le système de gestion de transaction (18, 18a),
e) placement du porte-monnaie électronique ou de la carte bancaire (10) sur le terminal (12) par le client, dans lequel une application (22) située sur le terminal (12) communique avec cette carte (10) au moyen d'un procédé CCP et le montant à payer est débité du portemonnaie électronique ou d'un compte bancaire attribué à la carte bancaire (10) ou un tel débit est ordonné,
f) crédit de la carte de commerçant (14) attribuée au terminal (12) par le biais du code de référence du montant débité du portemonnaie électronique ou du compte bancaire.

9. Procédé selon la revendication 8, **caractérisé en ce que** la sélection du produit et/ou la communication de l'intention d'achat conformément à l'étape de procédé a) s'effectue par un moyen de télécommunication, en particulier par Internet, téléphone ou fax, ou personnellement dans un magasin de détail.

10. Procédé selon la revendication 9, **caractérisé en ce que**, suite à la sélection du produit et/ou à la communication de l'intention d'achat par un moyen de télécommunication, les étapes de procédé suivantes sont effectuées :
- communication au système de gestion de transaction (18, 18a) du montant à payer, par le biais d'un système de commerce en ligne du commerçant,
- génération d'un code de référence attribué au compte receveur et au montant à payer,
- transmission du code de référence au système de commerce en ligne du commerçant, dans lequel celui-ci est ensuite indiqué au client par un moyen de télécommunication ou par communication orale,
- saisie du code de référence par le client dans l'application (22) sur son terminal (12),
- communication au système de gestion de transaction (18, 18a) du code de référence par le biais de l'application (22) sur le terminal (12),
- communication du code de référence ainsi que du montant à payer au terminal (12) depuis le système de gestion de transaction (18, 18a),
- indication du montant à payer sur un dispositif d'affichage du terminal (12),
- confirmation du montant à payer par le client par placement du porte-monnaie électronique ou de la carte bancaire (10) sur le terminal (12), afin d'initier l'opération de paiement.

11. Procédé selon la revendication 9, **caractérisé en ce que** suite à la sélection du produit et/ou la communication de l'intention d'achat en personne dans un magasin les étapes de procédé suivantes sont effectuées :
- démarrage d'une application commerçant (22) sur un terminal (12), en particulier sur un terminal radio mobile d'un commerçant,
- connexion de cette application commerçant (22) à un système de gestion de transaction (18, 18a),
- communication d'un code de référence au terminal (12) du commerçant depuis le système de gestion de transaction (18, 18a), dans lequel ce code de référence est ordonné à une carte de commerçant (14),
- communication ou saisie du montant à payer dans l'application commerçant (22),
- indication du montant à payer sur un dispositif d'affichage sur le terminal (12),
- confirmation du montant à payer par le client par placement du porte-monnaie électronique ou de la carte bancaire (10) sur le terminal (12), afin d'initier l'opération de paiement.
